# EUROPEAN PATENT SPECIFICATION

(11) **EP 4 121 322 B1**
(45) Date of publication and mention of the grant of the patent: **09.12.2026**
(21) Application number: 21716581.0
(22) Date of filing: 15.03.2021
(51) Int. Cl.: B60R 16/02, B60L 1/00, H01R 11/12, H01B 7/00, H01R 25/16, H01B 9/02

(54) **HIGH POWER SHIELDED BUSBAR FOR ELECTRIC VEHICLE CHARGING AND POWER DISTRIBUTION**
ABGESCHIRMTE HOCHLEISTUNGSSAMMELSCHIENE ZUM LADEN UND VERTEILEN VON STROM IN EINEM ELEKTROFAHRZEUG
BARRE OMNIBUS BLINDÉE À HAUTE PUISSANCE POUR CHARGE DE VÉHICULE ÉLECTRIQUE ET DISTRIBUTION D'ÉNERGIE

(30) Priority: 16.03.2020 US 202062990395 P
(43) Date of publication of application: 25.01.2023
(73) Proprietor: Tesla, Inc., Austin, TX 78725 (US)
(72) Inventor: PRASAD, Neil, Austin, Texas 78725 (US); PANG, James, Austin, Texas 78725 (US)
(74) Representative: Zacco Sweden AB
(86) International application number: PCT/US2021/022373
(87) International publication number: WO 2021/188438

(56) References cited:
- EP-A1- 2 253 963
- EP-A1- 2 610 878
- EP-B1- 2 253 963
- EP-B1- 2 610 878
- WO-A1-2014/070851
- WO-A1-2017/072073
- US-A1- 2019 199 075

## Description

### TECHNICAL FIELD

The disclosed subject matter generally relates to systems and methods for high power shielded busbar for electric vehicle charging and power distribution.

### BACKGROUND

Traditional car wiring for vehicles includes a plurality of cables for communicating power signals or data signals from one end to another. Traditional cable designs are unable to support the increased demand for high-power distribution inside the vehicle. Further, there is a constant need for improving the designs of the cables to handle high power in excess of several hundred kilowatts. Traditional cables do not provide sturdy rigid high power shielded support for electric vehicle charging and power distribution. Moreover, as the number of electronic modules increases, the complexity and cost associated with traditional cables becomes excessive. In addition, failures in wires or conductors of large cable assemblies can be difficult to isolate and costly to repair.
Different prior art electric power distribution busbars are disclosed in EP 2 253 963 A1, EP 2 610 878 A1, WO 2017/072073 A1, US 2019/0199075 A1 and WO 2014/070851 A1.
The invention is defined in the claims.

### SUMMARY

For purposes of summarizing, certain aspects, advantages, and novel features have been described herein. It is to be understood that not all such advantages may be achieved in accordance with any one particular embodiment. Thus, the disclosed subject matter may be embodied or carried out in a manner that achieves or optimizes one advantage or group of advantages without achieving all advantages as may be taught or suggested herein. The invention is defined in the claims.

The details of one or more variations of the subject matter described herein are set forth in the accompanying drawings and the description below. Other features and advantages of the subject matter described herein will be apparent from the description and drawings, and from the claims. The disclosed subject matter is not, however, limited to any particular embodiment disclosed.

### BRIEF DESCRIPTION OF THE DRAWINGS

The accompanying drawings, which are incorporated in and constitute a part of this specification, show certain aspects of the subject matter disclosed herein and, together with the description, help explain some of the principles associated with the disclosed implementations as provided below.

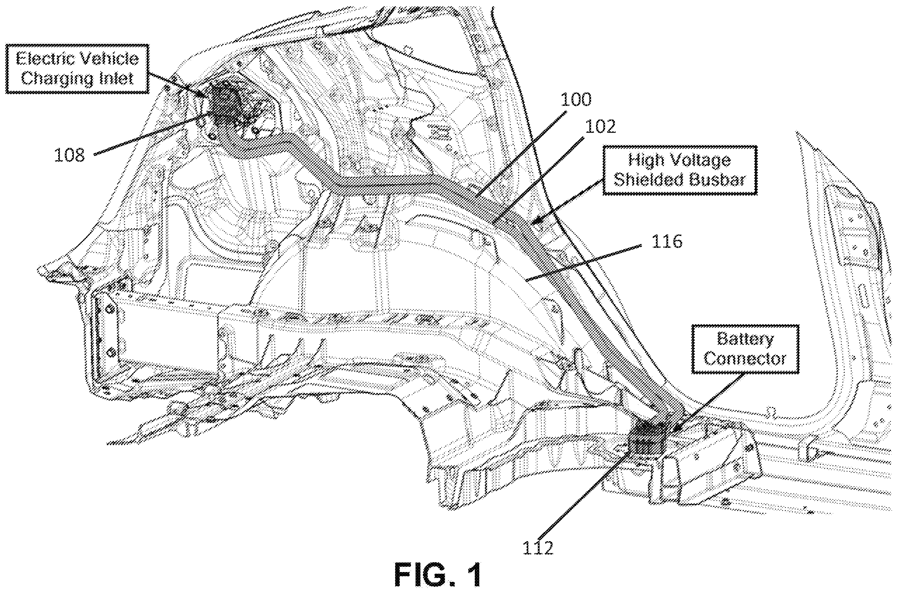

Figures 1-9 illustrate various embodiments of a high power shielded busbar for use within electric vehicles for charging and power distribution.

The figures may not be to scale in absolute or comparative terms and are intended to be exemplary. The relative placement of features and elements may have been modified for the purpose of illustrative clarity. Where practical, the same or similar reference numbers denote the same or similar or equivalent structures, features, aspects, or elements, in accordance with one or more embodiments.
FIG. 1 is a cutaway view depicting an embodiment of a high power shielded busbar installed to a vehicle
FIG. 2 is a close-up view of an embodiment of a high power shielded busbar connected to a vehicle chargeport.
FIG. 3a is perspective view of an embodiment of a high power shielded busbar.
FIG. 3b is perspective view of an embodiment of a high power shielded busbar with attached receptacles.
FIG. 4 is a cross-sectional view of an embodiment of a high power shielded busbar.
FIG. 5A - 5H are various views of busbar end connectors.
FIG. 6A - 6C are various views of busbar end connectors and associated receptacles.
FIG. 7A - 7D are various views of busbar end connectors and associated receptacles.
FIG. 8 is a busbar with associated receptacles and a grounding element.
FIG. 9 is perspective view of an alternate embodiment showing a set of high power shielded busbars within a semi-truck.

### DETAILED DESCRIPTION

In the following, numerous specific details are set forth to provide a thorough description of various embodiments. Certain embodiments may be practiced without these specific details or with some variations in detail. In some instances, certain features are described in less detail so as not to obscure other aspects. The level of detail associated with each of the elements or features should not be construed to qualify the novelty or importance of one feature over the others.

Embodiments relate to a solid core conductor busbar for transferring power from a first connection point to a second connection point. In some embodiments, the busbar transfers power from one point to another in an electric vehicle, for example from a charge port to a battery pack. In some embodiments, the busbar conductor may be made of any conductive material, such as aluminum or copper. In some embodiments, the busbar conductor is made by forging metal so that the busbar takes on a desired shape and format. For example, a cylindrical aluminum rod may be made by forging, wherein the end portions of the aluminum rod are forged to create the desired end connection points from the same metal as the solid core conductor material with no joints between the solid core conductor and the connection point. In one example, the end of an aluminum rod is forged to create a conductor with a flatted end. A through hole may be formed in the flattened end to receive a screw or bolt that allows a direct electrical connection between the sold conductor and the connection point. By not having joints or intermediate connections between the connection point and the solid core conductor, the busbar may have more reliability than other systems which include such joints or intermediate connections. It should be realized that the forged ends of the solid core conductor are not limited to being flattened ends. They may be forged into a variety of geometric shapes conducive to making a connection with a connection point without departing from this disclosure. For example, the forged ends may be made cylindrical, square, rectangular, hexagonal, notched, folded, angled or in any other configuration.

In some embodiments, the busbar includes a central solid conducting core, along with an electrical insulation layer that surrounds the central conducting core and provides electrical insulation of the conductor so it will be electrically isolated from external contacts. In one embodiment, the insulation layer may be placed onto the solid core by extruding, heat-shrinking, dipping, spraying, layering, brushing, or otherwise applying the insulation layer onto the conducting core by well-known means.

In some embodiments, an outer shield or shielding layer is then fitted over the insulated conducting core to provide additional safety, strength and electromagnetic insulation of the busbar from other neighboring components once installed into its target position within an electric vehicle or other system. The outer shield or shielding layer may be made of any conductive material, such as aluminum. According to the invention, the outer shield or shielding layer may act as a conductive layer and be grounded, for example to a vehicle body, to complement an isolation loss detection system between high voltage potentials.

In one embodiment, the insulated central conductor may be placed within a shield tube which has a diameter which allows it to slide over the insulated core. That shielded busbar may then be placed into a compression die to reduce the diameter of the shield tube so that it fits directly and snugly against the outer insulation layer of the busbar. This forms a unitary three-layer solid core busbar with a central solid core conductor, an insulation layer, and an outer shield compressed onto the insulation layer. By creating this type of unitary solid busbar configuration, the unitary busbar may be bent into a desired configuration to match the contours of the target application. For example, the unitary busbar may be bent to match the contours of a wheel well or interior side panel within an electric vehicle. The resultant layered assembly may withstand 3D form bending so that the solid busbar may match the contours of a vehicle and form complex packaging geometries. The solid nature of the unitary busbar allows for such bending as each layer is formed over the lower layer so that they mechanically support each other through the bending process. This also allows the unitary busbar to maintain a relatively low cross-sectional area while having the capability to transfer a relatively large amount of power from one point to another within a system.

In some embodiments, the central core of the busbar may be made from one or more conductors within the rigid busbar and have a circular cross section. In some embodiments, the one or more conductors have a rectangular cross section. In some embodiments, other cross-sectional geometries of the one or more conductors are used. In some embodiments, more than one busbar is run in parallel with another busbar to transfer relatively high power loads from a first connection point to a second connection point. For example, in an application where one megawatt of power is needed to be transferred from a first connection point to a second connection point, a set of 2, 3, 4, 5, 6, or more individual busbars may be used to distribute the load from the first connection point to the second connection point. This may allow the busbars to take differing routes from the first connection point to the second connection point, for example, if the size of and geometric configuration of the vehicle that needs to be traversed wouldn't allow for a single large diameter busbar to be run from the first connection point to the second connection point. This may also allow a single connection point to distribute power to multiple second connection points, for example wherein a single charge port of an electric vehicle transfers power to multiple different battery packs within the vehicle. In that situation, each busbar may be sized and shaped to carry the correct amount of power along a specific path within the vehicle to its target connection point.

In some embodiments, the high-power busbar configuration allows for over two times the conductor cross section for the same packaging volume. This increase in cross section allows for two times or more of the thermal performance enabling higher power capacity and allowing for increased vehicle interior volume due to reduced thermal clearance requirements to surrounding parts.

Through manufacturing methods utilizing CNC bending, complex routing may be achieved to package the busbar with bends in multiple axis and at lengths exceeding two meters. The rigidity of the busbar offers a self-supporting assembly which allows for the removal of traditional routing components necessary for traditional cable assemblies such as clips and brackets, reducing cost and complexity. This process may allow for time savings in both manufacturing and installation. Through simplification of the manufacturing method by removing non-value add processes, a lower cost may be achieved compared to a traditional cable assembly. In addition, size/mass may be reduced, and charged rate and thermal performance may be increased.

The high power shielded busbar may be used extensively around an electric vehicle and may be suited to static networks external to the high voltage battery pack. The application of the high power shielded busbar is suited to high voltage, high current applications, but is not limited to the combination of the two.

The high power shielded busbar provides excellent thermal performance (for example, two times the performance of equivalent sized cables), mass reduction to the vehicle and/or high power line assembly, cost reduction (e.g., not as many pieces, overhead, cheaper to manufacture etc.), and complexity reduction (e.g., the number of parts, processes, and/or supply chain complexity is reduced).

The high power shielded busbar makes DC fast charging currents possible that previously would have incurred prohibitive cost and mass penalties. The high power shielded busbar may support 350kW charging at 400V or additional power and voltages. The high power shielded busbar may distribute such power levels around a vehicle external to any shielded enclosure.

Figure 1 depicts a cut-away view of the inside of an electric vehicle and illustrates a pair of high power shielded busbars 100, 102. In one embodiment, the busbar is formed from a rigid solid core extrusion (aluminum, copper or other electrically conductive material), an insulation layer (cross-linked polyethylene (XLPE), polyvinyl chloride (PVC), silicone or other electrically insulated material), and an outer conductive layer (copper, aluminum or other electrically conductive material) which acts as a shield for electromagnetic interference and protection from damage. As illustrated, the busbars 100, 102 provide an electrical connection between an electrical vehicle charging inlet 108 and a battery connector 112. As can be appreciated, the wattage used to charge such electric vehicles can be very high. For example, in some embodiments a charging wattage of 100kW, 200kW, 300kW, 400kW or more may be used to charge electric vehicles. Thus, in one embodiment, the high power shielded busbars 100, 102 are sized to provide safe and stable transfer of such high power from the charging provide sufficient power from the charging inlet to the electric vehicle battery. It should also be realized that the high voltage shielded busbars 100, 102 may be bent and shaped to follow the interior configuration of the electric vehicle as illustrated in Figure 1. For example, the busbars may be shaped to follow the interior configuration of a wheel well 116 within the electric vehicle. Thus, the busbars may be hidden from the vehicle occupants by traversing underneath floor or side panels of the electric vehicle.

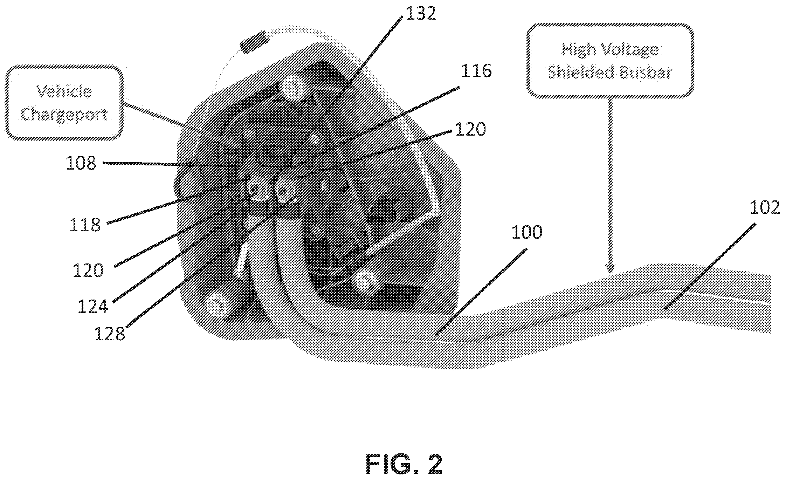

As shown is Figure 2, the busbars 100, 102 can be connected at a first end to the charging inlet 108. In some embodiments, the busbars 100, 102 are sufficiently rigid to be supported at only the two ends bearing the weight of the entire busbar 100, 102. Referring to the charging inlet 108, a receiver 116 can mechanically and electrically couple the busbars 100, 102 to the charging inlet 108. The receiver 116 can be fastened to the busbar 100, 102 via fasteners 118. For example, the busbars 100, 102 can have a connection portion 120 with a through hole (not shown).

The receiver 116 can be formed from a plastic molded portion that includes a pair of receptacles 124,128 for each connecting busbar 100, 102. The receptacle 124 can be separated from the receptacle 128 by a dividing wall 132. The receiver 116 can form an electrical coupling between a charging inlet 108 and the busbar 100, 102. In some embodiments the receiver 116 can be further coupled to a ground. The ground can have a structure similar, in at least some aspects, to the busbar 100, 102.

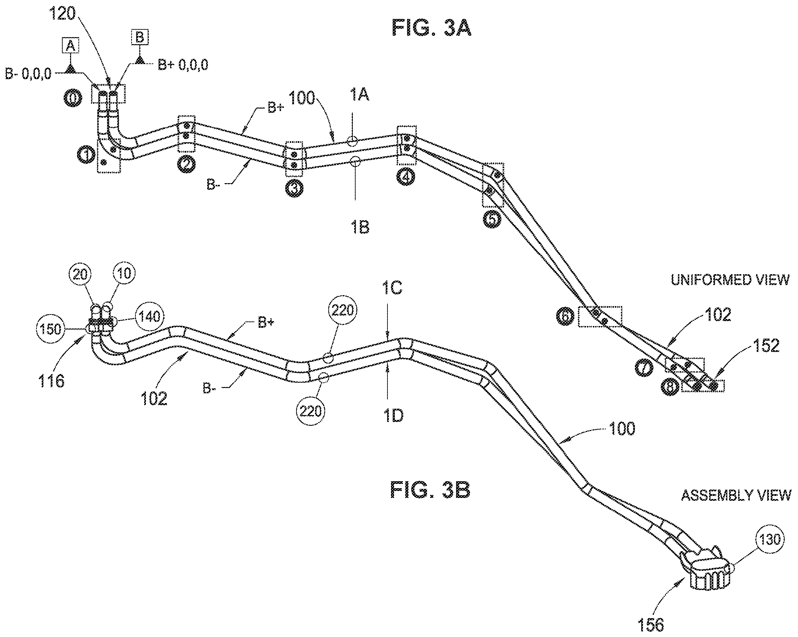

Figure 3A shows the busbars 100, 102 in a bent configuration. The busbars 100, 102 can be suitable for bending. The busbars 100, 102 can be supplied unbent and be subsequently bent to a required configuration. As illustrated, the busbars may be bent to have specific angles or radii at positions 1, 2, 3, 4, 5, 6, 7, and 8. These bends as illustrated are just one example of the configuration that may be used to follow the interior configuration of a particular vehicle. It should be understood that other configurations of busbars are contemplated by this disclosure, with each configuration following the specific configuration of the vehicle. Figure 100, 102 depict the busbars with connection portions 120, 152. The connection portion 152 may be similar to connection portion 120 is many aspects. In some embodiments, the connection portions 120, 152 can both have the same shape. In other embodiments, the connection portions 120, 152 may have different shapes. In some embodiments, the connection portions 120, 152 of the busbar 100 may be different shapes than the connection portions 120, 152 of the busbar 102.

Figure 3B. shows the busbars 100, 102 with the connection portions 120 coupled to the receiver 116. In the depicted embodiment, the busbars 100, 102 are connected to a second receiver 156. The second receiver 156 may be similar in may aspects to the first receiver 116.

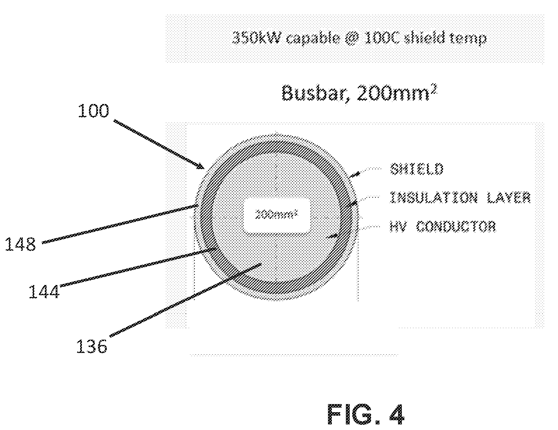

Figure 4 depicts a cross-section of the busbar 100. In the depicted embodiment the busbar 100 has the solid core 136, the insulation layer 144 and the outer conductive layer 148. The core 136 can be made of aluminum, copper or other electrically conductive material. The core 136 can provide mechanical support or structure to the busbar 100, 102. The insulation layer 144 can be XLPE, PVC, silicone or other electrically insulated material. The insulation layer can be surrounded by an outer shield layer 148. The outer shield layer 148 can provide a shield for electromagnetic interference and protection from damage. The outer conductive layer 148 can be made of copper, aluminum or other electrically conductive or nonconductive material used to provide electromagnetic shielding for the busbar 100. The outer conductive layer 148 can provide mechanical support or structure to the busbar 100, 102. The core 136, insulated layer 144 and conductive layer 148 can be mechanically fastened to each other. For example, the core 136, insulation layer 144 and conductive layer 148 can be swaged together.

In some embodiments, the core 136 can have a cross-sectional surface area of about 200 mm². In some embodiments, the core 136 can have a cross-sectional area of between about 3 mm² and 300 mm². In some embodiments, the core 136 can have a cross-sectional area of between about 150 mm² and 250 mm², or about 160 mm² and 200 mm² or any number between these values. In some embodiments, the core can have a cross-sectional area that is greater than about 10, 20, 30, 40, 50, 60, 70, 80, 90, 100, 110, 120, 130, 140, 150, 160, 170, 180, 190, 200, 210, 220, 230, 240, 250, 260, 270, 280, 290, or 300 mm. In some embodiments, the insulation layer 144 can have a thickness of about 1 mm. In some embodiments, the insulation layer 144 can have a thickness between about 0.5 and about 2 mm. In some embodiments, the outer conductive layer 148 can have a thickness of about 1 mm. In some embodiments, outer conductive layer 148 can have a thickness between about 0.5 and about 2 mm.

The busbar 100,102 can be capable of transmitting 350kW at 600V while maintaining less than about 100 degrees Celsius shield temperature. In some embodiments, the busbar 100,102 can be capable of transmitting about 250kW - 450kW at about 400V - 1000V while maintaining less than an about 80 Celsius to 120 Celsius shield temperature. In some embodiments, the busbar 100,102 can be capable of transmitting about 300kW - 400kW at about 500V - 700V while maintaining less than about 90 Celsius to about 110 Celsius of shield temperature.

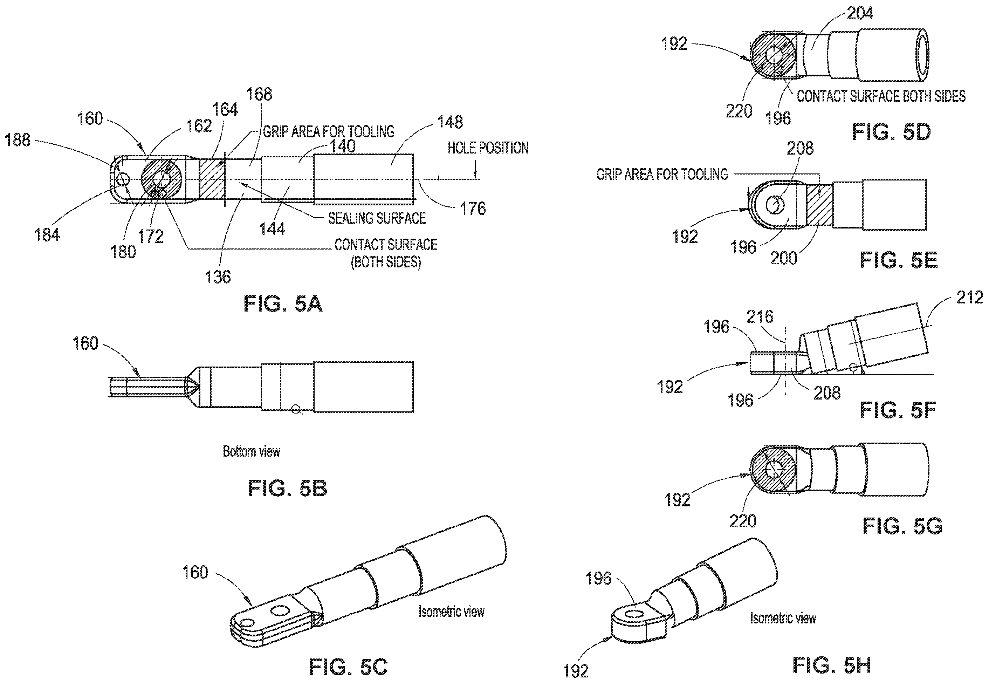

Figures 5A - 5H depict various types of connection portions 120, 152. Other shapes for the connection portions 120, 152 are also possible. The connection portion 120, 152 can be a cylindrical extension of the core 136. The connection portion 120 of the busbar 100, 102 can be a flattened portion of a solid core 136 of the busbar 100, 102. The solid core 136 of the busbar 100, 102 can be made of an electrically conducting and can be made of a rigid material. The connection portion 120 can be formed by the exposed solid core 136. In some embodiments the connection portion 120 can be a flattened and stripped portion of the busbar 100, 102. The connection portion 120 can include a flattened region and a cylindrical region. The solid core 136 can be made of aluminum, copper or other electrically conductive material. The core 136 can provide mechanical support or structure to the busbar 100, 102. A partially stripped portion 140 can be arranged proximate to the connection portion 120. The partially stripped portion 140 can have a cylindrical solid core 136, and an annular insulation layer 144. The insulation layer 144 can be XLPE, PVC, silicone or other electrically insulated material. The insulation layer can be surrounded by an outer conductive layer 148. The outer conductive layer 148 can provide a shield for electromagnetic interference and protection from damage. The outer conductive layer 148 can be made of copper, aluminum or other electrically conductive material. The outer conductive layer 148 can provide mechanical support or structure to the busbar 100, 102.

Figure 5A-5C depict a flat type connection portion 160. The connection portion 160 can have a flattened portion 162, a grip area 164 for tooling, a cylindrical sealing surface 168, and a partially stripped portion 140. In the depicted embodiment the flattened portion 162 can have a primary hole 172. The primary hole 172 can be a through hole. The primary hole 172 can be disposed along a longitudinal axis 176. A contact surface 180 can be disposed circumferentially around the primary hole 172. The contact surface 180 can extend to both sides of the flattened portion 162. The flattened portion can include a secondary hole 184. The secondary hole 184 can be a through hole. The secondary hole 184 can be located along the longitudinal axis 176. The secondary hole 184 can be smaller in diameter than the primary hole 172. The secondary hole 184 can be positioned closer to the tip 188 of the connection portion 160. The grip portion 164 may extend only partially around the circumference of the connection portion 160.

Figure 5D-5H depict an angled connection portion 192. The angled connection portion 192 can have a flattened portion 196, a grip area 200 for tooling, a cylindrical sealing surface 204, and a partially stripped portion 140. In the depicted embodiment the angled connection portion 192 can have a hole 208. The hole 208 can be a through hole. The hole 208 can be disposed along a longitudinal axis 212. A hole axis 216, the hole axis 216 aligned with the hole 208 can be non-perpendicular to the longitudinal axis 212. The flattened portion 196 can have a flat surface, the longitudinal axis 212 can be non-parallel to the flat surface of the flattened portion 196. The flat surface of the flattened portion 196 can be perpendicular to the hole axis 216. The flattened portion can have a width 198. The width 198 of the flattened portion can be less than the diameter of the core 136. A contact surface 220 can be disposed circumferentially around the hole 208. The contact surface 220 can extend to both sides of the flattened portion 196. The grip portion 200 may extend only partially around the circumference of the angled connection portion 192. In some embodiments, the flattened portion can include 2 or more holes, the various holes can be different sizes and have various arrangements.

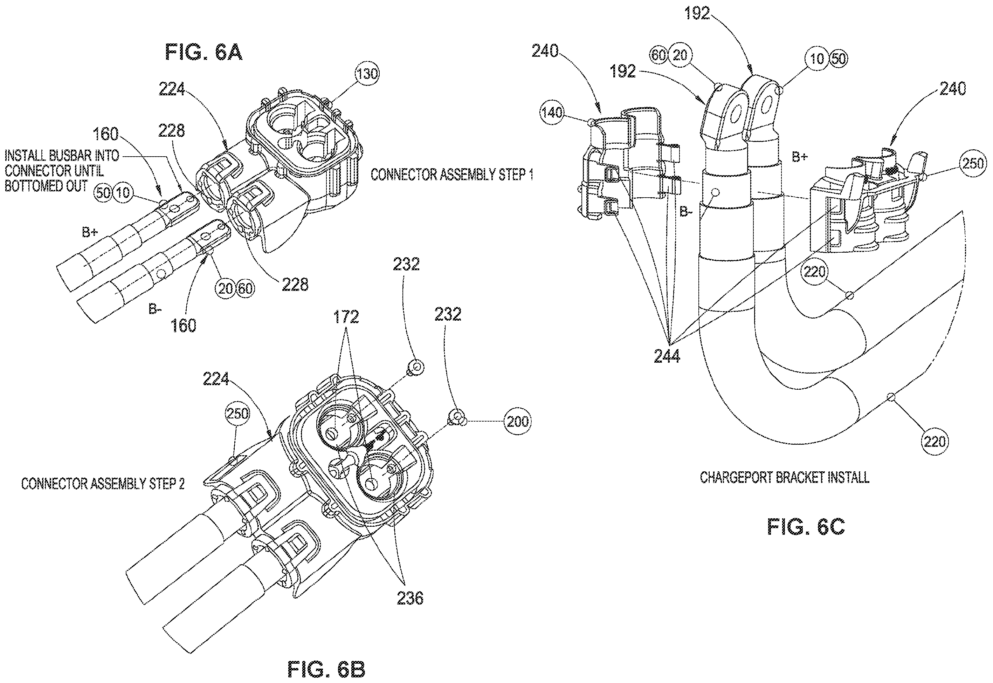

Figures 6A - 6B depict an alternate embodiment of a connection portion receiver 224. The receiver 224 can be sized and shaped to receive the connectors 120, or 152 and provide complete electromagnetic shielding and/or sealing of the busbar end connection. In the depicted embodiment, the receiver 224 is sized and shaped to receive a flat-type connection portion 160. The receiver 224 can have two apertures 228. The apertures 228 can each receiver a connection portion 160. The connection portion 160 can be fastened into place with fasteners 232. The fasteners 232 can engage with the primary holes 172. The fasteners 232 can extend partially into one of two openings 236. The opening 236 can be aligned with the primary hole 172. The receiver 224 can have deep enough apertures for the conductive core 136 to be at least partially (e.g., fully) enclosed. In some embodiments, the opening 236 can be an inlet for electrically conductive gel or grease to be applied to the conducting surface.

Figure 6C depicts a bracket 240. The bracket 240 can be sized and shaped to receive the connectors 120 or 152. In the depicted embodiment, the bracket 240 is sized and shaped to retain the angled connection portion 192. The bracket 240 can have clips 244 for coupling with the connection portion 192. The bracket 240 can be composed of two parts which are connected together by the clips 244 to retain the connection portion 192. The bracket 240 can at least partially (e.g., completely) cover the conductive core 136.

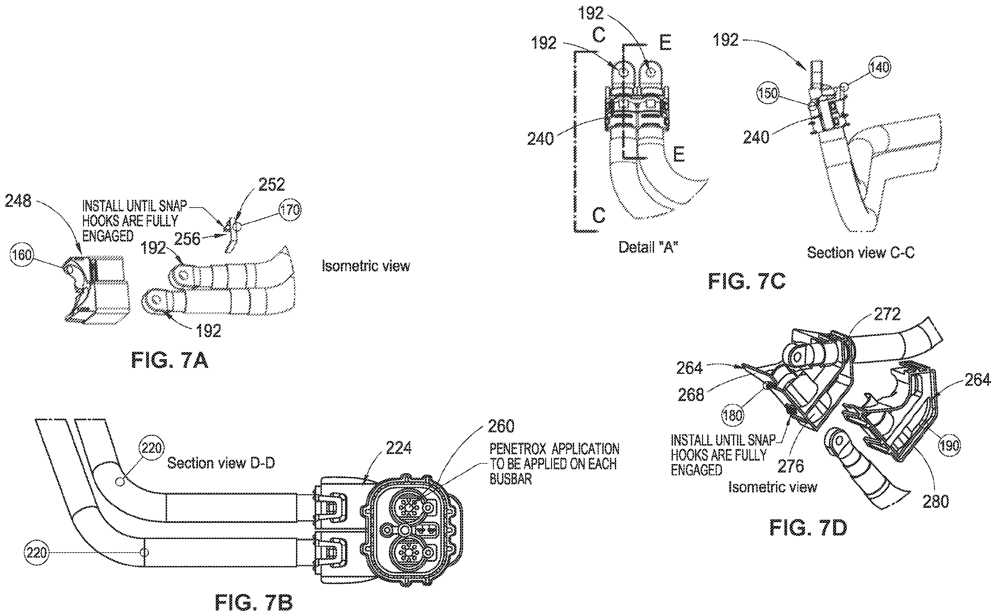

Figure 7A depicts another embodiment of a bracket 248. The bracket 248 can be sized and shaped to receive the connectors 120 or 152. In the depicted embodiment, the bracket 248 is sized and shaped to retain the angled connection portion 192. A clip 252 can hold the connection portion 192 in place. The clip 252 can have a width 256. The width 256 can be less than the width 198 of the flattened portion 196.

Figure 7B depicts a top view of the receiver 224 with a cover 260 installed. In some embodiments, an oxide inhibiting electrical joint compound can be applied inside the opening 236.

Figure 7C depicts a side view of the bracket 240 with the angled connection portion 192 installed.

Figure 7D depicts another embodiment of a bracket 264. The bracket 264 can be sized and shaped to receive the connectors 120 or 152. In the depicted embodiment, the bracket 248 is sized and shaped to retain the angled connection portion 192. The bracket 264 can receive two angled connection portions 192. The connection portions 192 can be positioned at an angle to each other when installed in the bracket 264. The bracket 264 can have a base plate 268. The base plate 268 can have holes 272, 276 for receiving the angled connection portions 192. The base plate 268 can connect to a top plate 280. The top plate can lock the connection portions 192 in place relative to the bracket 264.

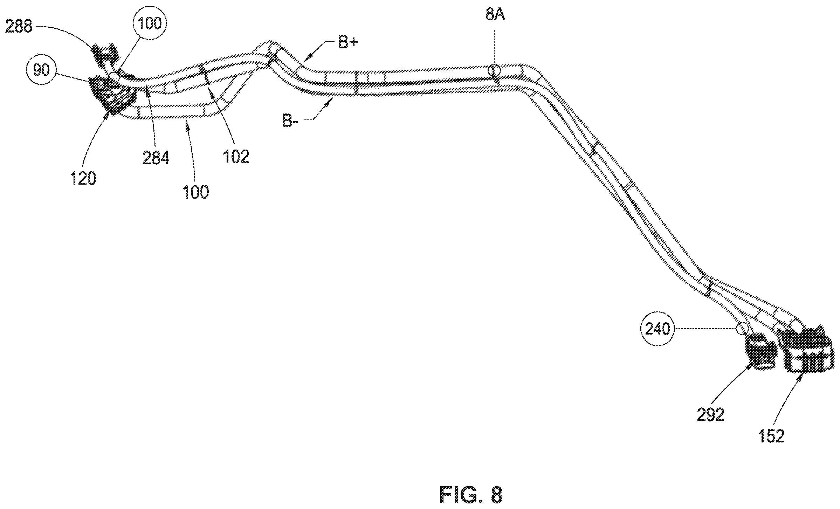

Figure 8 depicts the busbars 100, 102 connection at the ends to connection portions 120, 152. Figure 8 further depicts the attachment of a harness or conductive member 284 to the busbars for the purpose of carrying a lower power from a source to a load. The flexible harness member 284 can be similar in various aspects to the busbars 100, 102 in conducting current from a source to a load. The harness member 284 can have mounts 288, 292. The mounts 288, 292 can be suitable for supporting the weight of the member 284 and conforming to vehicle packaging. The ground mounts 288, 292 can be similar to connection portions 120, 152 in many aspects.

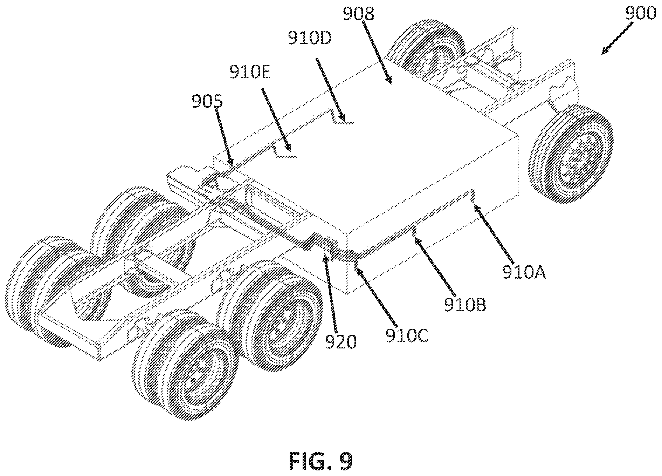

Figure 9 shows an embodiment of a semi-truck 900 having a set of bus bars 905 distributed through the interior of a battery storage container 908. As indicated the busbars 905 are configured to conform to the dimensions of the battery storage container 908 and have end terminals 910A-E which may connect to one or more battery connectors (not shown) within the semi-truck 900. A charging port 920 may be used to connect an external charging cable to the busbars 905 to communicate power to the battery connectors within the battery storage container 908.

## Claims

1. An electric vehicle power distribution system comprising:
a unitary busbar (100, 102) comprising:
a solid core conductor, (136), an insulation layer, (144), a shielding layer (148) compressed against the insulation layer and at least one formed connector (120) made from the solid core conductor, wherein the shielding layer is a conductive material formed from a single formed component;
a first connection point configured to electrically connect with the at least one formed connector on the busbar;
a second connection point electrically coupled to the busbar at an end opposite to the at least one formed connector; and
a rigid ground conductor is connected to the shielding layer, wherein the shielding layer is grounded to the electric vehicle via the rigid ground conductor,
wherein the unitary busbar is bent to conform to the interior configuration of the electric vehicle.

2. The electric vehicle power distribution system of Claim 1, wherein the first connection point is an electric vehicle charge port; and/or wherein the second connection point is a battery connector in an electric vehicle.

3. The electric vehicle power distribution system of Claim 1, wherein the formed connector is forged from the solid core conductor;
wherein the formed connector preferably comprises a flattened portion and a through hole disposed through the flattened portion.

4. The electric vehicle power distribution system of Claim 1, wherein the busbar can support charging of 350kW at 400V while maintaining a shielding layer temperature of about 100 degrees Celsius or less.

5. The electric vehicle power distribution system of Claim 1, wherein the solid core conductor is an aluminum or copper conductor; and/or
wherein the shielding layer an aluminum or copper shielding layer; and/or
wherein the insulation layer comprises cross-linked polyethylene (XLPE), polyvinyl chloride (PVC) or silicone.

6. The electric vehicle power distribution system of Claim 1, wherein the busbar can support charging at 350kW, preferably at 400V.

7. The electric vehicle power distribution system of Claim 1, wherein the surface area of a cross-section of the conductor is about 200mm².

8. The electric vehicle power distribution system of Claim 1, wherein the thickness of the insulation layer is about 1mm; and/or wherein the thickness of the shielding layer is about 1mm

9. The electric vehicle power distribution system of Claim 1, wherein the busbar comprises two formed connectors, with one formed connector forged at each end of the solid core conductor; wherein the two formed connectors preferably each comprise a through hole.

10. A method of making a unitary busbar of an electric vehicle, comprising:
forging at least one end of a solid core conductor to have at least one connector;
applying an insulating layer to the solid core conductor;
compressing an outer shield over the insulating layer to form a unitary busbar, wherein the outer shield is a conductive material formed from a single formed component; and
bending the unitary busbar to conform to the interior configuration of the electric vehicle, wherein the outer shield is grounded to the electric vehicle via a rigid ground conductor of the electric vehicle..

11. The method of Claim 10, wherein applying the insulating layer comprises at least one of extruding, spraying, dipping or heat shrinking the insulating layer to the solid core conductor.

12. The method of Claim 10, wherein forging the at least one end of the solid core conductor comprises forging an end of the conductor to have a flattened portion with a through hole wherein the flattened portion preferably is forged at an angle relative to the solid core conductor.

13. The method of Claim 10, wherein forging at least one end of the solid core conductor comprises forging two ends of the solid core conductor to each have a flattened portion and a through hole.

## Patentansprüche

1. Stromverteilungssystem für Elektrofahrzeuge, umfassend:
eine einteilige Sammelschiene (100, 102), umfassend:
einen Festkernleiter, (136), eine Isolationsschicht, (144), eine Abschirmschicht (148), die gegen die Isolationsschicht gedrückt ist, und mindestens einen ausgebildeten Verbinder (120), der aus dem Festkernleiter hergestellt ist, wobei die Abschirmschicht ein leitfähiges Material ist, das aus einer einzelnen ausgebildeten Komponente ausgebildet ist;
einen ersten Verbindungspunkt, der dazu konfiguriert ist, mit dem mindestens einen ausgebildeten Verbinder auf der Sammelschiene elektrisch verbunden zu werden;
einen zweiten Verbindungspunkt, der an einem Ende gegenüber dem mindestens einen ausgebildeten Verbinder elektrisch mit der Sammelschiene gekoppelt ist; und
ein starrer Erdungsleiter mit der Abschirmschicht verbunden ist, wobei die Abschirmschicht über den starren Erdungsleiter mit dem Elektrofahrzeug geerdet ist,
wobei die einteilige Sammelschiene gebogen ist, um der Innenkonfiguration des Elektrofahrzeugs zu entsprechen.

2. Stromverteilungssystem für Elektrofahrzeuge nach Anspruch 1, wobei der erste Verbindungspunkt ein Ladeanschluss für Elektrofahrzeuge ist; und/oder wobei der zweite Verbindungspunkt ein Batterieverbinder in einem Elektrofahrzeug ist.

3. Stromverteilungssystem für Elektrofahrzeuge nach Anspruch 1, wobei der ausgebildete Verbinder aus dem Festkernleiter geschmiedet ist;
wobei der ausgebildete Verbinder vorzugsweise einen abgeflachten Abschnitt und ein Durchgangsloch umfasst, das durch den abgeflachten Abschnitt hindurch angeordnet ist.

4. Stromverteilungssystem für Elektrofahrzeuge nach Anspruch 1, wobei die Sammelschiene eine Ladung von 350 kW bei 400 V unterstützen kann, während sie eine Temperatur der Abschirmschicht von etwa 100 Grad Celsius oder weniger aufrechterhält.

5. Stromverteilungssystem für Elektrofahrzeuge nach Anspruch 1, wobei der Festkernleiter ein Aluminium- oder Kupferleiter ist; und/oder
wobei die Abschirmschicht eine Aluminium- oder Kupferabschirmschicht ist; und/oder
wobei die Isolationsschicht vernetztes Polyethylen (XLPE), Polyvinylchlorid (PVC) oder Silikon umfasst.

6. Stromverteilungssystem für Elektrofahrzeuge nach Anspruch 1, wobei die Sammelschiene eine Ladung bei 350 kW, vorzugsweise bei 400 V, unterstützen kann.

7. Stromverteilungssystem für Elektrofahrzeuge nach Anspruch 1, wobei der Oberflächenbereich eines Querschnitts des Leiters etwa 200 mm² beträgt.

8. Stromverteilungssystem für Elektrofahrzeuge nach Anspruch 1, wobei die Dicke der Isolationsschicht etwa 1 mm beträgt; und/oder wobei die Dicke der Abschirmschicht etwa 1 mm beträgt

9. Stromverteilungssystem für Elektrofahrzeuge nach Anspruch 1, wobei die Sammelschiene zwei ausgebildete Verbinder umfasst, wobei ein ausgebildeter Verbinder an jedem Ende des Festkernleiters geschmiedet ist; wobei die zwei ausgebildeten Verbinder vorzugsweise jeweils ein Durchgangsloch umfassen.

10. Verfahren zum Herstellen einer einteiligen Sammelschiene eines Elektrofahrzeugs, umfassend:
Schmieden mindestens eines Endes eines Festkernleiters, um mindestens einen Verbinder aufzuweisen;
Aufbringen einer Isolationsschicht auf den Festkernleiter;
Drücken einer äußeren Abschirmung über die Isolationsschicht, um eine einteilige Sammelschiene auszubilden, wobei die äußere Abschirmung ein leitfähiges Material ist, das aus einer einzelnen ausgebildeten Komponente ausgebildet ist; und
Biegen der einteiligen Sammelschiene, um der Innenkonfiguration des Elektrofahrzeugs zu entsprechen, wobei die äußere Abschirmung über einen starren Erdungsleiter des Elektrofahrzeugs mit dem Elektrofahrzeug geerdet ist..

11. Verfahren nach Anspruch 10, wobei das Aufbringen der Isolationsschicht mindestens eines von Extrudieren, Sprühen, Eintauchen oder Wärmeschrumpfen der Isolationsschicht auf den Festkernleiter umfasst.

12. Verfahren nach Anspruch 10, wobei das Schmieden des mindestens einen Endes des Festkernleiters das Schmieden eines Endes des Leiters umfasst, um einen abgeflachten Abschnitt mit eine Durchgangsloch aufzuweisen, wobei der abgeflachte Abschnitt vorzugsweise in einem Winkel relativ zu den Festkernleiter geschmiedet ist.

13. Verfahren nach Anspruch 10, wobei das Schmieden mindestens eines Endes des Festkernleiters das Schmieden von zwei Enden des Festkernleiters umfasst, um jeweils einen abgeflachten Abschnitt und ein Durchgangsloch aufzuweisen.

## Revendications

1. Système de distribution d'énergie de véhicule électrique comprenant :
une barre omnibus unitaire (100,102) comprenant :
un conducteur à âme pleine (136), une couche d'isolation (144), une couche de blindage (148) compressée contre la couche d'isolation et au moins un connecteur formé (120) fabriqué à partir du conducteur à âme pleine, dans lequel la couche de blindage est un matériau conducteur formé à partir d'un composant formé unique ;
un premier point de connexion configuré pour la connexion électrique avec l'au moins un connecteur formé sur la barre omnibus ;
un second point de connexion couplé électriquement à la barre omnibus au niveau d'une extrémité opposée à l'au moins un connecteur formé ; et
un conducteur de masse rigide est connecté à la couche de blindage, dans lequel la couche de blindage est mise à la masse au véhicule électrique par l'intermédiaire du conducteur de masse rigide,
dans lequel la barre omnibus unitaire est courbée pour la conformation à la configuration intérieure du véhicule électrique.

2. Système de distribution d'énergie de véhicule électrique selon la revendication 1, dans lequel le premier point de connexion est un port de charge de véhicule électrique ; et/ou dans lequel le second point de connexion est un connecteur de batterie dans un véhicule électrique.

3. Système de distribution d'énergie de véhicule électrique selon la revendication 1, dans lequel le connecteur formé est forgé à partir du conducteur à âme pleine ;
dans lequel le connecteur formé comprend de préférence une portion aplatie et un trou traversant disposé à travers la portion aplatie.

4. Système de distribution d'énergie de véhicule électrique selon la revendication 1, dans lequel la barre omnibus peut supporter une charge de 350 kW à 400 V tout en maintenant une température de couche de blindage d'environ 100 degrés Celsius ou moins.

5. Système de distribution d'énergie de véhicule électrique selon la revendication 1, dans lequel le conducteur à âme pleine est un conducteur en aluminium ou en cuivre ; et/ou
dans lequel la couche de blindage est une couche de blindage en aluminium ou en cuivre ; et/ou
dans lequel la couche d'isolation comprend du polyéthylène réticulé (XLPE), du chlorure de polyvinyle (PVC) ou du silicone.

6. Système de distribution d'énergie de véhicule électrique selon la revendication 1, dans lequel la barre omnibus peut supporter une charge à 350 kW, de préférence à 400 V.

7. Système de distribution d'énergie de véhicule électrique selon la revendication 1, dans lequel la surface d'une coupe transversale du conducteur est d'environ 200 mm².

8. Système de distribution d'énergie de véhicule électrique selon la revendication 1, dans lequel l'épaisseur de la couche d'isolation est d'environ 1 mm ; et/ou dans lequel l'épaisseur de la couche de blindage est d'environ 1 mm.

9. Système de distribution d'énergie de véhicule électrique selon la revendication 1, dans lequel la barre omnibus comprend deux connecteurs formés, avec un connecteur formé forgé au niveau de chaque extrémité du conducteur à âme pleine ; dans lequel les deux connecteurs formés comprennent de préférence chacun un trou traversant.

10. Procédé de fabrication d'une barre omnibus unitaire d'un véhicule électrique, comprenant :
le forgeage d'au moins une extrémité d'un conducteur à âme pleine pour l'obtention d'au moins un connecteur ;
l'application d'une couche isolante au conducteur à âme pleine ;
la compression d'un blindage externe sur la couche isolante pour la formation d'une barre omnibus unitaire, dans lequel le blindage externe est un matériau conducteur formé à partir d'un composant formé unique ; et
le courbage de la barre omnibus unitaire pour la conformation à la configuration intérieure du véhicule électrique, dans lequel le blindage externe est mis à la masse au véhicule électrique par l'intermédiaire d'un conducteur de masse rigide du véhicule électrique.

11. Procédé selon la revendication 10, dans lequel l'application de la couche isolante comprend au moins l'un parmi l'extrusion, la pulvérisation, le trempage ou le thermorétrécissement de la couche isolante sur le conducteur à âme pleine.

12. Procédé selon la revendication 10, dans lequel le forgeage de l'au moins une extrémité du conducteur à âme pleine comprend le forgeage d'une extrémité du conducteur pour l'obtention d'une portion aplatie avec un trou traversant dans lequel la portion aplatie est de préférence forgée selon un angle par rapport au conducteur à âme pleine.

13. Procédé selon la revendication 10, dans lequel le forgeage d'au moins une extrémité du conducteur à âme pleine comprend le forgeage de deux extrémités du conducteur à âme pleine pour l'obtention de chacune une portion aplatie et un trou traversant.
